# EUROPEAN PATENT SPECIFICATION

(11) **EP 0 472 419 B1**
(45) Date of publication and mention of the grant of the patent: **26.10.1994**
(21) Application number: 91307689.9
(22) Date of filing: 21.08.1991
(51) Int. Cl.: B60R 22/36

(54) **A retractor for a safety-belt**
Sicherheitsgurtaufroller
Enrouleur pour ceinture de sécurité

(30) Priority: 23.08.1990 GB 9018559
(43) Date of publication of application: 26.02.1992
(73) Proprietor: GENERAL ENGINEERING (NETHERLANDS) B.V., NL-3581 CV Utrecht (NL)
(72) Inventor: Aubry, Claude, F-76420 Bihorel (FR)
(74) Representative: Frankland, Nigel Howard

(56) References cited:
- GB-A- 2 133 073
- US-A- 4 044 969
- US-A- 4 905 928

## Description

THE PRESENT INVENTION relates to a retractor for a safety-belt.

There are many prior proposals relating to retractors for safety-belts, such as safety-belts intended for use in motor vehicles. Most retractors are provided with a locking mechanism adapted to lock the retractor, to prevent any belt being withdrawn from the retractor, in the event that an accident arises. Typically such a retractor may respond either to deceleration of a vehicle or to rapid withdrawal of safety-belt from the retractor, and many retractors respond to both these parameters in order to effect locking of the spool or shaft of the retractor.

Whilst many different locking arrangements have been proposed, interest has been shown in locking arrangements in which a fixed locking ring is provided and a locking element is provided which can be driven substantially radially outwardly into engagement with the locking ring, thus locking the shaft in position.

Reference may be made to GB-A-2113073 which relates to a retractor reel for a safety-belt of this type.

It is to be noted that this prior art Specification discloses a retractor reel assembly incorporating a shaft or spool which is rotatably mounted in a housing and which is adapted to receive a length of safety-belt. A spring is provided to apply rotational bias to the shaft to wind in the belt, and a locking mechanism is provided to lock the shaft or spool. The locking mechanism comprises a wheel which normally rotates with the shaft or spool. Means are provided to effect a rotation of the wheel relative to the shaft or spool, as the shaft or spool rotates, in response to a predetermined deceleration of the vehicle or in response to the withdrawal of the belt from the spool or shaft at a rate in excess of a predetermined rate. Thus, whenever one or other of these two situations are detected, the wheel is effectively "slowed down" with reference to the rotation of the shaft or is even stopped stationary, so that the shaft can rotate relative to the stationary wheel.

Two locking elements are carried on the wheel, substantially symmetrically, each defining a recess which engages a respective radial projection of the shaft. In the arrangement of the prior art Specification both of the locking elements carry one or more teeth which are adapted to engage a toothed locking ring, which is fixed in position and which surrounds the locking elements. The locking elements are guided, by means of corresponding pins and slots present on the elements and the wheel, to effect a predetermined motion when the wheel rotates relative to the shaft (which can, of course, be considered as being equivalent to when the shaft rotates relative to the wheel).

The components of arrangements such as that disclosed in GB-A-2113073 are commonly formed either from a plastics material or from metal by means of a stamping process. In any event the components are not usually manufactured with very great precision or to very strict tolerances. In the arrangement of GB-A-2113073 the two locking elements move outwardly in a direction which is parallel to a diameter extending across the locking ring. If the locking elements and/or the locking ring are not of nominal size then the tolerances to which these components are produced may add up and give rise to a risk of the teeth on the locking elements not being accurately aligned with the recesses defined by the teeth in the locking ring. In this case, as the locking elements move outwardly in a direction parallel to a diameter of the locking ring, the tips of the teeth on the locking elements may initially engage the tips of the teeth on the locking ring whereupon the locking elements will be deflected back towards the disengaged position before again being forced towards the locking ring. The teeth may once again come into tip-to-tip engagement with the locking elements and again be deflected back towards the disengaged position. Thus, if the teeth on the locking elements are not accurately aligned with the recesses defined by the teeth in the locking ring the arrangement may 'jump' and the locking elements may not positively engage the locking ring. Clearly this is highly undesirable since, as the arrangement 'jumps', a considerable length of safety-belt may become withdrawn from the belt spool. The results of this may be disastrous.

The present invention seeks to provide an improved retractor of the general type disclosed in GB-A-2113073A.

According to this invention as defined in claim 1 there is provided a retractor reel assembly for a safety belt in a vehicle comprising a housing, a shaft or spool rotatably mounted in the housing to receive a length of the safety-belt, means to apply a rotational bias to the shaft or spool to wind in the belt, and a locking mechanism to lock the shaft or spool, the locking mechanism comprising a disc or wheel normally rotatable with the shaft or spool, means to effect a rotation of the disc relative to the shaft or spool, as the shaft or spool rotates, in response to a predetermined deceleration of the vehicle, or the withdrawal of the belt from the spool or shaft at a rate in excess of a predetermined rate, two locking elements carried on the disc substantially symmetrically, each defining a recess which engages a respective radial projection of the shaft, at least one said locking element carrying one or more teeth adapted to engage a toothed locking ring, formed on or fixed to the housing, which surrounds the locking elements, the locking elements being guided to effect a predetermined motion when the disc rotates relative to the shaft, said motion comprising an initial linear motion of each locking element in opposed parallel directions, and a final motion in which the tooth or teeth on said one locking element move additionally with a component tangential to the adjacent locking ring, to bring said tooth or teeth into engagement with the locking ring to lock the spool or shaft against further rotation.

Thus, in contrast to the prior art arrangement where the locking elements effect a purely linear movement and the teeth on the locking elements may come into tip-to-tip engagement with the teeth on the locking ring, the locking elements of the retractor of the present invention are guided so as to move with an initial linear motion and subsequently with a motion having a component tangential to the locking ring which ensures that the tooth or teeth are guided into the recesses defined by the teeth on the locking ring and move into face-to-face engagement with those teeth. This obviates the danger of the arrangement 'jumping' as can occur with the prior art arrangement, whilst at the same time still permitting the components to be manufactured to tolerances which are not unduly strict and which do not give rise to any additional manufacturing expense.

Preferably said final motion is a pivoting motion about an effective pivot point.

Conveniently each locking element is of substantially semi-circular shape, the elements having diametrically extending edges which are parallel, the said recesses being formed in the said diametrically extending edges, said at least one locking element carrying said tooth or teeth at the junction of the diametrically extending edge and the semi-circular periphery of the element.

Advantageously each locking element is guided by means of guide pins inserted in guide slots.

Conveniently the guide pins are on the disc and the guide slots are on the locking elements.

Preferably each guide slot has an initial linear portion and a terminal portion inclined to the initial portion.

Advantageously the terminal portion is arcuate.

Conveniently the two locking elements are not identical.

Advantageously the disc carries two projections, located on opposite sides of the axis defined by the shaft or spool, the projection being of different form.

Preferably said one locking element carries locking teeth, and the other element carries smaller locking teeth.

In order that the invention may be more readily understood, and so that further features thereof may be appreciated, the invention will now be described, by way of example, with reference to the accompanying drawings in which
FIGURE 1 is a side view of part of a retractor in accordance with the invention illustrating part of the shaft, a fixed locking ring and a locking mechanism which operatively extends between the shaft and the locking ring, illustrating the mechanism in the unlocked condition,
FIGURE 2 is a view corresponding to Figure 1 showing the elements moving partially towards the locked condition,
FIGURE 3 is a view corresponding to Figures 1 and 2 showing the elements moved closer to the locked position, and
FIGURE 4 is a view corresponding to Figures 1 to 3 showing the elements in the locked condition.

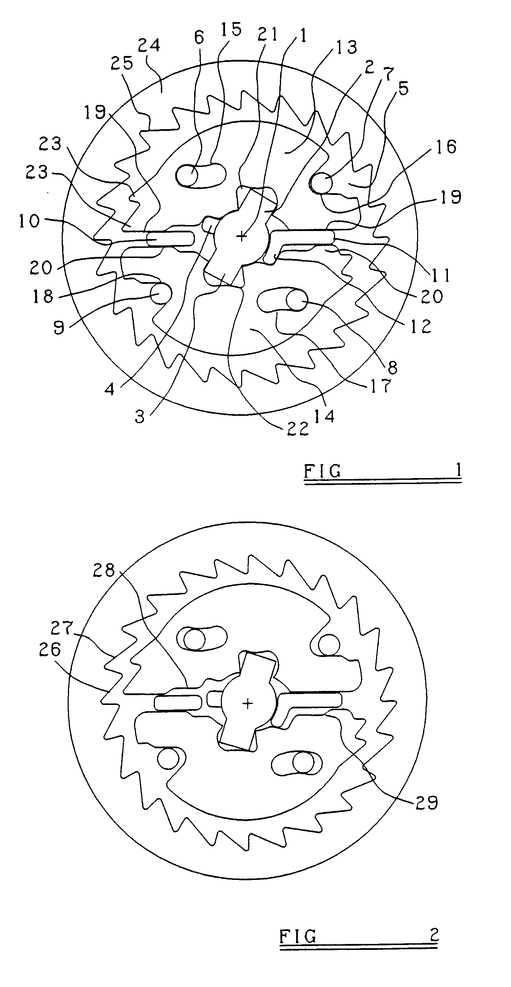

Referring initially to Figure 1 of the accompanying drawings, a shaft 1 is provided which is rotatable about its longitudinal axis, which may have a spool mounted thereon, and which receives a portion of safety-belt. Means (not shown) may be provided to impart a rotational bits to the shaft to cause the shaft to "wind in" any belt present upon it.

The shaft, as illustrated, is provided with two diametrically opposed radially extending projections 2,3. The projections may be of any convenient form but are here shown as being projections having relatively square ends.

A further projection 4 is provided extending radially outwardly from the shaft, at a position located symmetrically between the two projections 2,3, the projection 4 being of lesser extent than the projections 2,3 and also being of a more rounded form.

The shaft 1 passes through an aperture formed in the centre of a disc 5. The disc 5 thus lies in a plane which extends perpendicularly to the axis of the shaft 1. The disc 5 carries various axially extending projections thereon which will now be described.

The disc 5 carries four axially extending pins 6,7,8,9 and also carries two lugs 10,11. The pins 6,7,8,9 are each of circular form and are disposed substantially symmetrically about the axis of the shaft 1. The two lugs 10,11 each comprise a substantially planar portion, these planar portions being aligned with a diameter of the disc 5, the lug 11 also comprising an arcuate portion 12 which lies adjacent and partially surrounds the shaft 1.

Two locking elements 13,14 are mounted on the disc 5. The locking element 13 has a slot 15 having an initial linear portion and a subsequent arcuate portion which accommodates the pin 6. The locking element 13 also has a recess 16 formed therein which accommodates the pin 7. Similarly, the locking element 14 has a slot 17, of a form similar to that of the slot 15, to receive the pin 8 and also defines a recess 18 to receive the pin 9.

The two locking elements 13,14 are each of substantially semi-circular shape, the elements having substantially diametrically extending edges 19, 20 which lie parallel with each other, these edges abutting the sides of the lugs 10,11.

The diametrically extending edge 19 defines a recess 21 dimensioned to receive the projection 2 on the shaft 1 and similarly the diametrically extending edge 20 defines a recess 22 adapted to receive the lug 3 provided on the shaft 1. As will be described hereinafter the recesses are of relatively complex shape, the recess 21 also initially accommodating the projection 4 and the recess 22 finally receiving the projection 4 as the shaft 1 rotates relative to the disc 5, as will now be described.

The locking element 13 has, at the junction between the diametrically extending edge 19 and the arcuate outer edge of the element adjacent the slot 15, two locking teeth 23. Whilst the locking element 14 does not have such teeth, in an alternative embodiment of the invention the two locking elements may be of precisely the same form and thus the locking element 14 would have corresponding teeth.

It is to be noted that the locking elements as described are surrounded by a fixed locking ring 24 provided with recesses 25 adapted to receive the teeth 23 on the locking element 13.

It is to be appreciated that under normal circumstances, as the shaft 1 rotates, a safety-belt is withdrawn into or paid out from the retractor, and the disc 5 will rotate in synchronism with the shaft 1. Thus the two locking elements are retained, in the position illustrated in Figure 1, relative to the pins 6,7,8 and 9 and the lugs 10 and 11 as the disc 5 rotates. Thus the entire assembly, as described, apart from the outer locking ring 24, will rotate in synchronism.

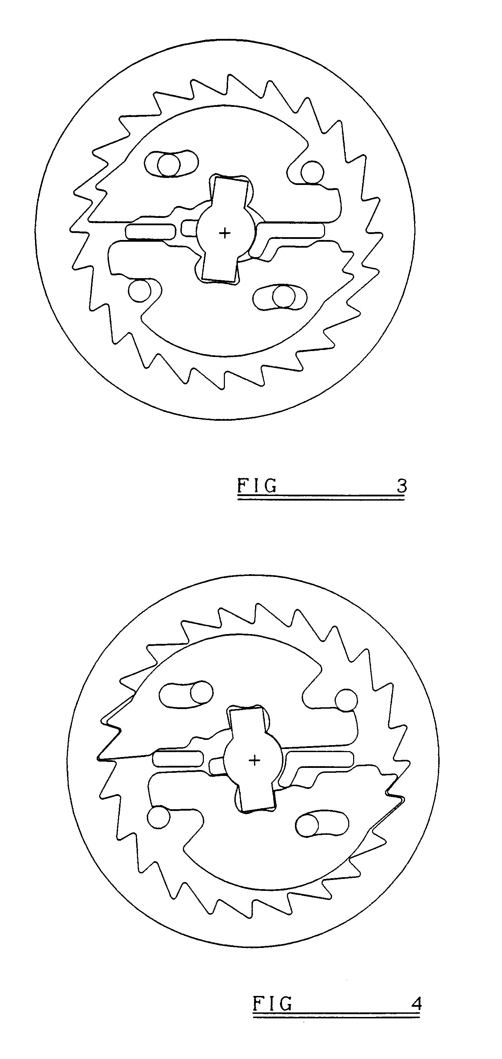

However, means are provided to stop the rotation of the disc 5 under accident conditions. Thus, if a vehicle in which the described retractor is mounted decelerates with a deceleration in excess of a predetermined level, or if the belt is withdrawn from the retractor at a rate in excess of a predetermined rate, the movement of the disc 5 will be arrested. The disc 5 will always stop at a position where the plane defined by the two lugs 10 and 11 is aligned with two diametrically opposed teeth present on the locking ring 24. Thus, the components will, as the disc 5 stops, always have a position relative to each other such as that illustrated in Figure 1. When the disc has stopped rotating, the shaft 1 will continue to rotate. The projections 2 and 3 provided on the shaft are engaged within the recesses 21 and 22 in the locking elements as described, and continued rotation of the shaft in the anti-clockwise sense will cause the locking elements 13 and 14 to move. The locking element 13 will move substantially towards the left and the locking element 14 will move substantially towards the right as illustrated in Figure 2. Initially, the diametrically extending edges 19 and 20 provided on the locking elements engage the lugs 10 and 11, and thus the locking elements each move in a direction substantially parallel to a diameter of the disc 5 extending through the lugs 10 and 11. The locking teeth 23 thus begin to move outwardly substantially radially as can be seen in Figure 2. The teeth 23 are substantially aligned with recesses 26,27 as shown in Figure 2. It can be seen that the locking elements are guided in this movement not only by the engagement of the diametrically extending edges 19 and 20 of the locking elements with the lugs 10 and 11, but also by the linear portions of the slots 15 and 17 which engage the pins 6 and 8, and by the engagements of the pins 7 and 9 with the edges of the recesses 16 and 18 provided to accommodate those pins. However, after the locking elements have moved linearly by a predetermined distance to the position shown in Figure 3 the pins 6 and 8 enter the arcuately formed portions of the slots 15 and 17, and initial parts 28,29 of the recesses 21,22 become aligned with the lugs 10 and 11, and the pins 7 and 9 reach portions defining the perimeter of the recesses 16 and 18 which are somewhat inclined, thus permitting the locking elements to effect a slight pivotal movement about the pins 6 and 8. The lugs 10 and 11 still engage the parts 28 and 29 of the recesses 21 and 22, and the locking elements continue to move substantially radially outwardly under the continuing influence caused by the further rotation of the shaft 1.

As can be seen, however, in Figure 4 as a final part of the movement, the locking elements 13 and 14 pivot about the pins 6 and 8, thus bringing the teeth 23 firmly into engagement with the recesses 26,27 provided in the locking ring 24. This cycle of movement ensures that adequate locking is achieved, but does not involve the use of parts manufactured to have a very fine tolerance. The differing shape of the two recesses 21,22 in the locking elements 13,14 is used to ensure that the elements 13,14 are correctly located upon assembly of the retractor and is particularly useful when assembly of the retractor is automated.

The final part of the motion of the locking elements 13,14 enables satisfactory face-to-face locking of the teeth on the element 13 with the teeth on the locking ring 24, without the need for any additional movement of the disc 5 once it has been arrested.

Thus by adopting the expedience of the invention a retractor reel assemboly may be fabricated which locks in a totally satisfactory manner, the assembly being relatively economic to manufacture.

## Claims

1. A retractor reel assembly for a safety belt in a vehicle comprising a housing, a shaft or spool (1) rotatably mounted in the housing to receive a length of the safety belt, means to apply a rotational bias to the shaft or spool to wind in the belt, and a locking mechanism to lock the shaft or spool, the locking mechanism comprising a disc (5) normally rotatable with the shaft or spool, means to effect a rotation of the disc relative to the shaft or spool, as the shaft or spool rotates, in response to a predetermined deceleration of the vehicle, or the withdrawal of the belt from the spool or shaft at a rate in excess of a predetermined rate, two locking elements (13, 14) carried on the disc substantially symmetrically, each defining a recess (21, 22) which engages a respective radial projection (2, 3) of the shaft, at least one said locking element carrying one or more teeth (23) adapted to engage a toothed locking ring (24), formed on or fixed to the housing, which surrounds the locking elements, the locking elements being guided to effect a predetermined motion when the disc rotates relative to the shaft, said motion comprising an initial linear motion of each locking element in opposed parallel directions, characterised in that the motion additionally comprises a final motion in which the tooth or teeth (23) on said one locking element (13) move with a component tangential to the adjacent locking ring (24), to bring said tooth or teeth (23) into engagement with the locking ring to lock the spool or shaft (1) against further rotation.

2. A retractor according to Claim 1 wherein said final motion is a pivoting motion about an effective pivot point (6).

3. A retractor according to Claim 1 or 2 wherein each locking element(13,14) is of substantially semi-circular shape, the elements having diametrically extending edges(19,20) which are parallel, the said recesses(21,22) being formed in the said diametrically extending edges, said at least one locking element(13) carrying said tooth or teeth(23) at the junction of the diametrically extending edge and the semi-circular periphery of the element.

4. A retractor according to any one of Claims 1 to 3 wherein each locking element is guided by means of guide pins(6,7,8,9) inserted in guide slots(15,17).

5. A retractor according to Claim 4 wherein the guide pins(6,7,8,9) are on the disc(5) and the guide slots(15,17) are on the locking elements(13,14).

6. A retractor according to Claim 4 or 5 wherein each guide slot(15,17) has an initial linear portion and a terminal portion inclined to the initial portion.

7. A retractor according to Claim 6 wherein the terminal portion is arcuate.

8. A retractor according to any one of the preceding Claims wherein the two locking elements(13,14) are not identical.

9. A retractor according to Claim 8 wherein the disc(5) carries two projections(10,11) located on opposite sides of the axis defined by the shaft or spool(1), the projections being of different form.

10. A retractor according to Claim 8 or 9 wherein said one locking element(13) carries locking teeth(23), and the other element(14) carries smaller locking teeth.

## Patentansprüche

1. Aufrollerspulenanordnung für einen Sicherheitsgurt in einem Fahrzeug mit einem Gehäuse, mit einer Welle oder Rolle (1), die drehbar in dem Gehäuse angeordnet ist, um ein Längenstück des Sicherheitsgurts aufzunehmen, mit Mitteln zum Aufbringen einer Vorspannung in Drehrichtung auf die Welle oder Rolle, um den Gurt aufzuwickeln, und mit einer Sperreinrichtung zum Sperren der Welle oder Rolle, wobei die Sperreinrichtung verfügt über eine normalerweise mit der Welle oder Rolle drehbare Scheibe (5), über Mittel, um eine Drehung der Scheibe gegenüber der Welle oder Rolle zu bewirken, wenn sich die Welle oder Rolle dreht, in Reaktion auf eine vorbestimmte Verzögerung des Fahrzeugs oder das Zurückziehen des Gurts von der Rolle oder Welle mit einer Geschwindigkeit, die über einer vorbestimmten Geschwindigkeit liegt, über zwei Sperrelemente (13, 14), die an der Scheibe im wesentlichen symmetrisch gelagert sind und je eine Aussparung (21, 22) begrenzen, die einen jeweiligen radialen Vorsprung (2, 3) der Welle erfaßt, wobei mindestens ein Sperrelement einen oder mehrere Zähne (23) trägt, der bzw. die zum Erfassen eines verzahnten Sperrings (24) geeignet sind, der an dem Gehäuse ausgebildet oder an diesem befestigt ist, das die Sperrelemente umgibt, wobei die Sperrelemente geführt sind, um eine vorbestimmte Bewegung zu bewirken, wenn sich die Scheibe gegenüber der Welle dreht, wobei die Bewegung eine anfängliche lineare Bewegung jedes Sperrelements in entgegengesetzten, parallelen Richtungen umfaßt, **dadurch gekennzeichnet**, daß die Bewegung zusätzlich eine abschließende Bewegung umfaßt, bei der sich der Zahn oder die Zähne (23) an einem Sperrelement (13) mit einer zu dem benachbarten Sperring (24) tangentialen Komponente bewegt bzw. bewegen, um den Zahn oder die Zähne (23) mit dem Sperring zum Eingriff zu bringen, um die Rolle oder Welle (1) gegen eine weitere Drehung zu sperren.

2. Aufroller nach Anspruch 1, wobei die abschließende Bewegung eine Schwenkbewegung um einen effektiven Schwenkpunkt (6) ist.

3. Aufroller nach Anspruch 1 oder 2, wobei jedes Sperrelement (13, 14) eine im wesentlichen halbkreisförmige Gestalt aufweist, wobei die Elemente sich diametral erstreckende Ränder (19, 20) aufweisen, die parallel verlaufen, die Aussparungen (21, 22) in den sich diametral erstreckenden Rändern ausgebildet sind, mindestens ein Sperrelement (13) den Zahn oder die Zähne (23) an der Verbindung des sich diametral erstreckenden Randes und des halbkreisförmigen Umfangs des Elements trägt.

4. Aufroller nach irgendeinem der Ansprüche 1 bis 3, wobei jedes Sperrelement durch Führungszapfen (6, 7, 8, 9) geführt ist, die in Führungsschlitzen (15, 17) eingesetzt sind.

5. Aufroller nach Anspruch 4, wobei die Führungszapfen (6, 7, 8, 9) an der Scheibe (5) und die Führungsschlitze (15, 17) an den Sperrelementen (13, 14) vorgesehen sind.

6. Aufroller nach Anspruch 4 oder 5, wobei jeder Führungsschlitz (15, 17) einen anfänglichen linearen Bereich und einen Endbereich aufweist, der gegenüber dem anfänglichen Bereich schräg verläuft.

7. Aufroller nach Anspruch 6, wobei der Endbereich gebogen ist.

8. Aufroller nach irgendeinem der vorhergehenden Ansprüche, wobei die beiden Sperrelemente (13, 14) nicht identisch sind.

9. Aufroller nach Anspruch 8, wobei die Scheibe (5) zwei Vorsprünge (10, 11) trägt, die an gegenüberliegenden Seiten der Achse angeordnet sind, die durch die Welle oder Rolle (1) definiert ist, wobei die Vorsprünge unterschiedliche Formen aufweisen.

10. Aufroller nach Anspruch 8 oder 9, wobei ein Sperrelement (13) Sperrzähne (23) und das andere Element (14) kleinere Sperrzähne trägt.

## Revendications

1. Agencement de rouleaux d'enrouleur pour une ceinture de sécurité dans un véhicule, comprenant un boîtier, un arbre ou une bobine (1) montée tournante dans le boîtier, afin de recevoir une longueur de la ceinture de sécurité, un moyen servant à appliquer un déplacement en rotation à l'arbre ou à la bobine afin d'enrouler la ceinture, et un mécanisme de verrouillage servant à verrouiller l'arbre ou la bobine, le mécanisme de verrouillage comprenant un disque (5) pouvant tourner normalement conjointement avec l'arbre ou la bobine, un moyen servant à faire tourner le disque par rapport à l'arbre ou la bobine, lorsque l'arbre ou la bobine tourne, en réponse à une décélération prédéterminée du véhicule, ou à l'extraction de la ceinture depuis la bobine ou l'arbre, à une vitesse supérieure à une vitesse prédéterminée, deux éléments de verrouillage (13, 14) montés sur le disque de façon pratiquement symétrique, chacun d'entre eux définissant une cavité (21, 22) qui vient en contact avec une saillie radiale (2, 3) respective de l'arbre, de ces éléments de verrouillage supportant une ou plusieurs dents (23) adaptées de façon à venir en prise avec une bague de verrouillage (24) dentée formée sur ou fixée au boîtier, qui entoure les éléments de verrouillage, les éléments de verrouillage étant guidés de façon à réaliser un mouvement prédéterminé lorsque le disque tourne par rapport à l'arbre, ledit mouvement comprenant un mouvement rectiligne initial de chaque élément de verrouillage, dans des directions parallèles opposées, caractérisé en ce que le mouvement comprend en outre un mouvement final dans lequel la ou les dents (23) situées sur ledit élément de verrouillage (13) se déplace selon une composante tangente à la bague de verrouillage (24) adjacente, afin de mettre en prise la ou lesdites dents (23) avec la bague de verrouillage, en vue d'empêcher la bobine ou l'arbre (1) de tourner encore.

2. Enrouleur selon la revendication 1, dans lequel ledit mouvement final est un mouvement pivotant, réalisé autour d'un point de pivotement (6) effectif.

3. Enrouleur selon la revendication 1 ou 2, dans lequel chaque élément de verrouillage (13, 14) présente une forme pratiquement semi-circulaire, les éléments présentant des bords (19, 20) s'étendant diamétralement qui sont parallèles, lesdites cavités (21, 22) étant formées dans lesdits bords s'étendant diamétralement, ledit au moins un élément de verrouillage (13) supportant la ou lesdites dents (23) au niveau de la jonction entre le bord s'étendant diamétralement et la périphérie semi-circulaire de l'élément.

4. Enrouleur selon l'une quelconque des revendications 1 à 3, dans lequel chaque élément de verrouillage aiguillé au moyen de tiges de guidage (6, 7, 8, 9) insérées dans des fentes de guidage (15, 17)

5. Enrouleur selon la revendication 4, dans lequel les tiges de guidage (6, 7, 8, 9) sont montées sur le disque (5) et les lentes de guidage (15, 17) sont ménagées dans les éléments de verrouillage (13, 14).

6. Enrouleur selon la revendication 4 ou 5, dans lequel chaque lente de guidage (15, 17) présente une partie rectiligne initiale et une partie d'extrémité inclinée par rapport à la partie initiale.

7. Enrouleur selon la revendication 6, dans lequel la partie d'extrémité présente une forme arquée.

8. Enrouleur selon l'une quelconque des revendications précédentes, dans lequel les deux éléments de verrouillage (13, 14) ne sont pas identiques.

9. Enrouleur selon la revendication 8, dans lequel le disque (5) porte deux saillies (10, 11) situées sur les cotés opposés de l'axe défini par l'arbre ou la bobine (1), les saillies présentant une forme différente.

10. Enrouleur selon la revendication 8 ou 9, dans lequel ledit élément de verrouillage (13) porte les dents de verrouillage (23) et l'autre élément (14) porte des dents de verrouillage plus petites.
